Europäisches Patentamt

(19) European Patent Office

Office européen des brevets

(11) Publication number: **0 062 514**
**A2**

(12) # EUROPEAN PATENT APPLICATION

(21) Application number: 82301762.9

(22) Date of filing: 02.04.82

(51) Int. Cl.³: **B 60 B 33/00**

(30) Priority: 06.04.81 US 251064

(43) Date of publication of application: 13.10.82
Bulletin 82/41

(84) Designated Contracting States: **DE FR GB IT**

(71) Applicant: HOUDAILLE INDUSTRIES, INC., 1 Financial
Plaza, Fort Lauderdale Florida 33394 (US)

(72) Inventor: Schultz, John C., 46 Homesgarth, Buffalo New
York 14225 (US)

(74) Representative: Thomson, Roger Bruce et al, POLLAK
MERCER & TENCH High Holborn House 52-54 High
Holborn, London WC1V 6RY (GB)

(54) Caster shimmy damper.

(57) A viscous rotary damper (28) adapted to attenuate
shimmy of a rotary member such as a caster comprising a
yoke (13) and axle (14) relative to an associated member
such as a wheelchair leg (21), comprises a pair of relatively
rotatable annular portions (29, 33) having means (31, 32–18,
40) for respective attachment to the members. The damper
portions (29, 33) have annular co-operative working sur-
faces (42, 43) of substantial length defining there between a
shear film gap working chamber (41) which is closed at
opposite ends by dynamic seals (44) and is substantially
filled by a viscous damping medium which provides a vis-
cous shear coupling yieldably resisting relative rotary move-
ments of the working surfaces (42, 43). The damper (28) is
adapted to be of miniaturized form comprising a stator ring
(29) and a rotor housing (33), the stator ring (29) being
arranged to be keyed to one (20) of the relatively rotary
members and the rotor (33) being arranged to be keyed to
the other (14) of the relatively rotary members.

- 1 -

CASTER SHIMMY DAMPER

DESCRIPTION

This invention relates to damping shimmy of a rotary member relative to an associated member and is more particularly concerned with controlling and avoiding shimmy of casters of the type which may be used in supporting wheelchairs, pushcarts, and the like.

By way of example, conveyances such as wheelchairs, pushcarts, and the like, may be run over hard surfaces, e.g. hospital corridors, where shimmying of the caster wheels may generate undesirable noise. Casters for such purposes are generally fairly small. The yokes for such casters may be on the order of 1-1/2" outside spread dimension, and the swivel axles may be on the order of about 1/2" diameter or less and on the order of three times as long as the diameter. Therefore, equipping such casters with shimmy attenuating means involves a substantial problem in miniaturization.

Large size shimmy dampers have heretofore been employed for aircraft landing wheel assemblies, as represented in U.S. Patent 2,661,917 employing the principle of torque resistance of shear films of a suitable viscous fluid operating between opposed parallel radially extending working surfaces relatively rotatably movable in their respective planes and wherein certain of the working surfaces are attached to a landing wheel strut and other of the surfaces to a wheel yoke. In such landing wheel assemblies there is ample room for the diameter to which the damper may extend and the lateral projection of the damper was found useful in effecting scissors connection between the strut and the yoke.

Also useful in the airplane industry, flutter dampers such as represented in U.S. Patent 3,228,494 have employed the shear film principle, utilizing axially extending complementary shear film spaced working surfaces on relatively rotatable members one of which may be attached to a relatively fixed part of the aircraft and the other attached to a relatively movable control surface in the wing or tail assembly for eliminating flutter. In this instance, as in the foregoing prior art example, relatively large damper units are involved.

A principal object of the present invention is to make use of the shear film principle within the necessarily miniature confines to which shimmy dampers must generally be limited for attenuating shimmy in casters on the order of those used on wheelchairs, or the like.

Another object of the present invention is to provide for damping wheelchair caster shimmy and which will not inhibit castering capability but permit 360° caster rotation, which will be inexpensive, which will require little or no modification in existing caster structure, which is adaptable for optional attachment, and which will avoid interference with folding or storage of the associated wheelchair.

For the attainment of the foregoing objects, the present invention provides in a damper for attenuating shimmy of a caster relative to a caster-supported member to which the caster is mounted for swiveling about a vertical axis: a first damper portion arranged to be fixed against rotation with respect to the caster-supported member, said first damper portion having an annular elongate first working surface of substantial length and arranged to be coaxial with said axis; a second damper portion arranged to be corotative with the caster, and having an annular elongate second working

- 3 -

surface complementary to and facing toward said working surface of said first damper portion; said working surfaces being spaced apart in limited working chamber gap relation; a viscous damping medium substantially filling said working chamber gap and providing a viscous shear coupling for yieldably resisting relative rotary movements of said working surfaces; and dynamic sealing means closing the opposite ends of said gap.

The invention also provides a method of attenuating shimmy of a caster relative to a caster-supported member to which the caster is mounted for swiveling about a vertical axis:  providing a first damper portion and fixing it against rotation with respect to the caster supported member, and with an annular elongate first working surface of said first damper portion coaxial with respect to said axis, providing a second damper portion corotative with the caster, and with an annular elongate second working surface of the second damper portion cooperatively related to said working surface of said first damper portion in limited spaced working chamber gap relation;  substantially filling said working chamber gap with a viscous damping medium and thereby providing a viscous shear coupling for yieldably resisting relative rotary movements of said working surfaces; and dynamically sealing the opposite ends of said working chamber gap.

Other objects, features and advantages of the present invention will be readily apparent from the following description of certain representative embodiments thereof, taken in conjunction with the accompanying drawing, although variations and modifications may be effected without departing from the spirit and scope of the novel concepts embodied in the disclosure and in which:

Fig. 1 is a perspective view of a caster assembly embodying the invention;

Fig. 2 is an enlarged fragmentary vertical sectional detail view taken substantially in the plane of line II-II of Fig. 1;

Fig. 3 is a horizontal sectional detail view taken substantially along the line III-III of Fig. 2;

Fig. 4 is a vertical sectional detail view similar to Fig. 2 but showing a slight modification; and

Fig. 5 is a fragmentary sectional detail view taken substantially along the line V-V of Fig. 4.

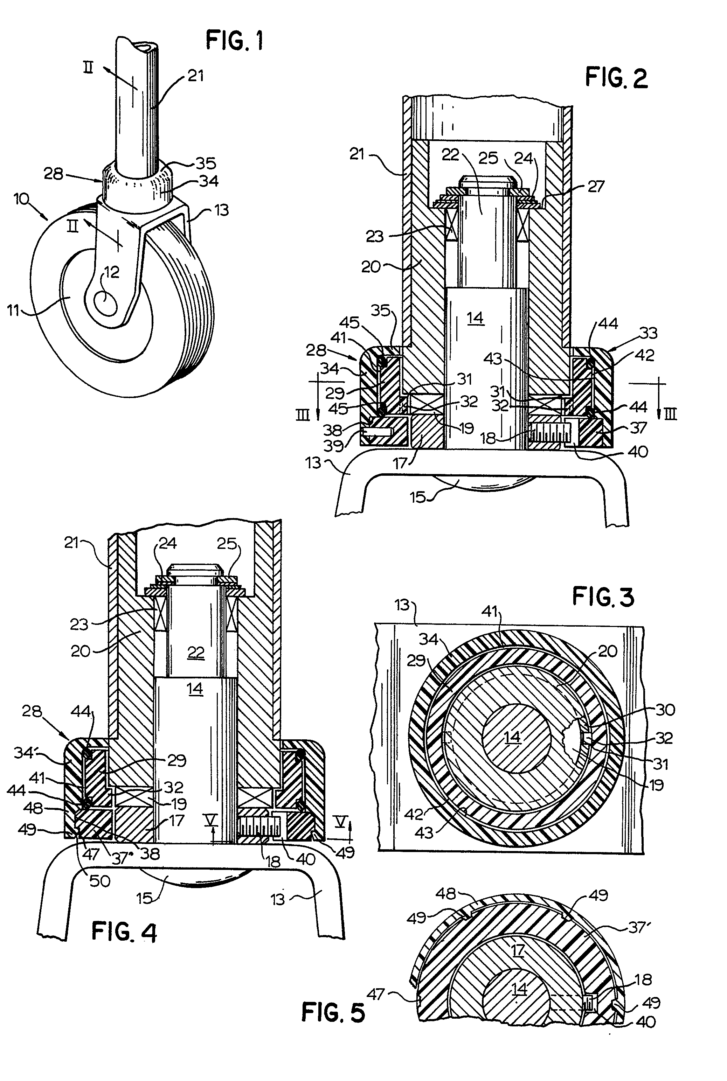

As shown in Fig. 1, a representative caster 10 includes a tired wheel 11 rotatably attached by means of an axle 12 within a yoke 13 carrying fixedly attached to the top of the yoke an upstanding axle 14 (Fig. 2) which may be secured to the yoke as by means of a riveted securement 15. In the illustrated instance, a thrust base collar 17 is engaged about the base of the axle 14, resting against the top of the yoke 13 and secured corotatably with the axle 14 by means of a set screw 18 threaded radially through the collar into engagement with the axle. A thrust bearing 19 engaged on the collar 17 supports the lower end of a tubular bushing 20 which is rotatably engaged about the axle 14 and is pressfitted or otherwise secured within the lower end portion of a tubular strut or leg 21, such as a wheelchair leg. On its upper end portion the axle 14 has a reduced diameter head portion 22 about which is mounted a radial bearing 23. Retention of the caster assembly with the bushing 20 is effected by means of a washer assembly 24 locked to the axle head portion 22 as by means of a snap ring 25 and engaging upon an upwardly facing annular shoulder 27 on the bushing 20. Through this arrangement, the caster 10 is adapted to swivel freely on and relative to the supported member 21.

According to the present invention, any tendency for the caster 10 to shimmy relative to the member 21 is attenuated by means of a damper 28 in the form of a small size annular assembly connected to and between the caster 10 and the member 21. For this purpose, the damper 28 has a ring-shaped portion 29 arranged to be fixed as a stator with respect to the caster-supported member 21. Desirably, the stator ring 29 is engaged about the lower end portion of the bushing 20 which projects downwardly from the lower end of the tubular member 21 and has a downwardly projecting annular skirt flange 30 about the thrust bearing 19 (Fig. 3). At suitable circumferential intervals, such as at diametrically opposite points, the flange 30 has keying notches 31 within which are received complementary radially inwardly projecting key lugs 32 on the lower inner portion of the stator ring 29. Thereby the stator ring 29 is held fixed against rotation relative to the bushing 20 and the tubular member 21.

Mounted about and defining an annular cavity in which the stator ring 29 is housed is a second damper portion 33 comprising a rotor having an annular part 34 of generally inverted "L" shaped cross section provided with a vertical body extending about the stator 29 and an upper end radially inwardly extending annular flange 35 which overlies the top of the stator ring 29. At its lower end, the rotor part 34 projects downwardly below the stator 29 and has locked thereto a closure and retainer ring 37 which is of an outside diameter to fit within a rabbet groove 38 providing a downwardly facing shoulder to which the ring 37 is held as by means of a securing pin 39. The retainer ring 37 projects radially inwardly to underlie the stator ring 29 and has a radially inwardly opening keying slot 40 within which is engaged, as a key, the radially outwardly projecting portion of the set screw 18, thereby locking the rotor portion 33 corotatably with the caster 10.

Damping is effected by means of a viscous damping medium substantially filling a shear film space gap working chamber 41 defined between annular, elongate cylindrical working surfaces 42 and 43 facing one another in radially spaced relation on respectively the stator 29 and the rotor part 34. The spaced relation between the working surfaces 42 and 43 is calculated to provide a shear film of the viscous damping medium therebetween to act as a shear coupling which will yieldably resist relative rotary movements of the working surfaces. By way of example the damping medium may be a silicone fluid of 100,000 centistokes. In a miniature size suitable for damping shimmying of wheelchair casters, and utilizing viscous medium of the kind and viscosity identified, a desirable shear film space gap for the working chamber 41 may be about 1/32" where the length of the working surface 42 of the stator 29 is about 5/32". Leakage of the viscous damping medium from the working chamber 41 is prevented by dynamic sealing means conveniently comprising respective elastic "O" rings 44 at the opposite ends of the working chamber and seated in suitable rabbet grooves 45 provided in the top and bottom outside corners of the stator part 29 and dimensioned to assure that the O-rings engage not only sealingly in the grooves but also against the opposing working surface 43 of the rotor part 34.

By preference, the damper parts 29, 34 and 37 are formed from solid plastic material which can be molded with a high degree of accuracy into the final shape, thus requiring no machining, and permitting assembly of the parts with the simplest tools and little labor, for low-cost manufacture. In assembling the parts, the relatively thickly viscous damping medium is applied in an ample coating to the working surface 42 of the stator part 29, and with the sealing rings 44 in place the stator part is inserted into the cavity of the rotor part 34 providing a housing therefor. Such assembly may be effected with the aid of a tapered assembly ring temporarily mounted in the rabbet groove 38 and a pusher applied for axial assembly pressure to the outer end of the stator part 29, as an assembly expedient. The viscous damping medium may serve as an assembly-assisting lubricant for the sealing rings 44 during the assembling maneuver. After the stator ring 29 has been assembled with the rotor part 34, the ring part 37 is assembled with the rotor part 34 and is pinned in place by means of the pin 39 or a plurality of such pins at circumferentially spaced intervals, thus completing assembly of the damper 28.

Joining of the damper 28 with the caster 10 is easily effected by relatively axially assembling the damper about the axle 14, before assembly of the bushing 20 with the caster, by aligning the keying slot 40 with the outward projection of the set screw 18 by which the thrust base ring 17 has been secured to the axle 14. The bushing 20 may then be assembled with the axle 14 and keyed by means of the slots 31 and the keys 32 with the rotor 29. Of course, if preferred, the assembly routine may be reversed in that the damper 28 may first be assembled with the bushing 20 and then the caster assembled with the bushing and the damper. In any event, after assembly of the damper and bushing with respect to the axle 14, the bushing is locked in place against axial separation from the caster by means of the washers 24 and the snap ring 25. The assembly as thus completed, may then be joined with the strut or chair leg 21, ready for service.

In a slightly modified arrangement as shown in Figs. 4 and 5, assembly of the retainer closure ring 37' with the rotor part 34' is simplified, eliminating the need for the securing pins 39. To this end, the ring 37' is provided along its lower outside corner with a set of downwardly and outwardly opening shallow sockets 47 which may be, for example, six in number equally spaced circumferentially. For snappingly retainingly engaging in the sockets 47, the rotor part 34' has about the rabbet groove 38' a stiffly resiliently flexible annular skirt flange 48 which has an inside diameter slightly larger than the outside diameter of the ring part 37' and is provided on its lower inside corner with radially inwardly projecting retainer lugs 49 complementary to the sockets 47 and adapted to be engaged with the sockets in snap-on-fit. To facilitate assembly, the lugs 49 are provided with respective leading cam surfaces 50. Through this arrangement, the ring part 37' is adapted to be assembled with the rotor part 34' by simply aligning the sockets 47 and the lugs 49 and then pressing the parts 34' and 37' axially together until the ring part 37' is seated in the rabbet groove 38' and the lugs 49 snapped retainingly into the sockets 47. Thereby, the parts 34' and 37' are held positively assembled together and corotative for efficient functioning of the rotor assembly. Other components of the structure as depicted in Figs. 4 and 5 are the same as in Figs. 1-3 and therefore identical reference characters will be understood to identify identical elements and description thereof will not be repeated although the reference characters have been applied to Figs. 4 and 5.

From the foregoing it will be appreciated that the damper 28 permits normal functioning of the caster 10, but efficiently attenuates any tendency for the caster to shimmy in the running mode.

CLAIMS

1. A damper for attenuating shimmy of a caster relative to a caster-supported member to which the caster is mounted for swivelling about a vertical axis, the damper comprising a first damper portion arranged to be fixed against rotation with respect to the caster-supported member; said first damper portion having an annular elongate first working surface of substantial length and arranged to be coaxial with said axis; a second damper portion arranged to be co-rotative with the caster, and having an annular elongate second working surface complementary to and facing towards said working surface of said first damper portion; said working surfaces being spaced to define a limited working chamber gap therebetween; a viscous damping medium substantially filling said working chamber gap and providing a viscous shear coupling for yieldably resisting relative rotary movements of said working surfaces; and dynamic sealing means closing the opposite ends of said gap.

2. A damper according to claim 1, wherein said second damper portion has a cavity therein in part defined by said second working surface, and said first damper portion is assembled within said cavity.

3. A damper according to claim 1 or 2, wherein said working surfaces are cylindrical and extend axially concentrically relative to the vertical axis.

4. A damper according to claim 1, 2 or 3, wherein said first and second damper portions have means for keyed connection to the caster-supported member and to the caster respectively.

5. A damper according to any preceding claim, wherein one of said damper portions comprises a ring member, and the other of said damper portions comprises a pair of annular parts one of which is of generally L-shape and the other of which is a closure ring, said parts being secured co-rotatively together and defining a cavity in which said ring member is housed.

6.    A damper according to claim 5, wherein said annular parts have snap-together interlocking retaining means.

7.    A viscous rotary damper adapted to attenuate shimmy of relatively rotary members, and comprising: a pair of relatively rotatable annular portions having means for respective attachment to said members; one of said portions having an annular cavity defined in part by an elongate first working surface; the other of said portions being assembled in said cavity and having an elongate second working surface complementary to and in shear film spaced relation to said first working surface; said surfaces defining a working chamber gap substantially filled with viscous damping medium providing a viscous shear coupling for yieldably resisting relative rotary movements of said surfaces; and dynamic sealing means sealing opposite ends of said working chamber gap.

8.    A damper according to claim 7, wherein said working surfaces are cylindrical and concentric about an axis common to said annular portions, and said means for attachment to said members are radially oriented.

9.    A damper according to claim 7 or 8, wherein said one portion comprises a generally L-shaped cross-section part having a radially extending annular flange defining one side of said cavity, and a generally ring-shaped part joined to said L-shaped part and spaced from said annular flange.

10.    A damper according to claim 9, wherein said cavity opens radially inwardly, said attachment means of said other of said portions comprises keying means oriented radially inwardly for keying engagement with complementary radially outwardly oriented keying means provided by the member to which attached, and said ring-shaped part has radially inwardly oriented keying means for keying co-operation with keying means of the member to which said other part is attached.

11. A damper according to claim 9, wherein said L-shaped part and said ring part have snap-together co-operative interconnecting means.

12. A viscous rotary damper according to claim 7, in combination with a caster which comprises one of said relatively rotary members, and wherein said means for attachment of said one portion comprises keying means, said caster having complementary keying means co-operating with said one portion keying means whereby said one portion is co-rotationally fixed to said caster member, and said attachment means of said other portion comprises keying means co-operating with complementary keying means on an upright part of the other relatively rotary member and said other portion is thereby torsionally locked to said upright part.

13. A method of attenuating shimmy of a caster relative to a caster-supported member to which the caster is mounted for swivelling about a vertical axis: the method comprising providing a first damper portion and fixing it against rotation with respect to the caster-supported member, and with an annular elongate first working surface of said first damper portion coaxial with respect to said axis; providing a second damper portion co-rotative with the caster; and with an annular elongate second working surface of the second damper portion cooperatively related to said working surface of said first damper portion in limited spaced working chamber gap relation; substantially filling said working chamber gap with a viscous damping medium and thereby providing a viscous shear coupling for yieldably resisting relative rotary movement of said working surfaces; and dynamically sealing the opposite ends of said working chamber gap.

14. A method according to claim 13, which comprises forming said second damper portion with an annular cavity in part defined by said second working surface, and assembling said first damper portion within said cavity.

15. A method according to claim 13 or 14, comprising forming said working surfaces cylindrically and disposing the working surfaces in telescopically cooperatively related working chamber gap relation.

16. A method according to claim 13, 14 or 15, comprising effecting a keyed connection between said first damper portion and said caster-supported member, and effecting a keyed connection between said second damper portion and said caster.

17. A method according to claim 13, 14 or 15, comprising forming one of said damper portions as a ring member, and forming the other of said damper portions as a pair of annular complementary parts one of which is generally L-shaped and the other of which is formed as a closure ring, and securing said parts co-rotatively together and housing said ring member in a cavity defined by said secured parts.

18. A method according to claim 17, comprising forming said annular parts with snap together interlocking retaining means, and securing the parts together by snapping the retaining means together.

19. A method according to any of claims 13 to 18, which comprises precision moulding said damper portions from plastics material, and assembling said portions without machining.

20. A method according to claim 13, which comprises applying said viscous damping medium to said first working surface, assembling dynamic seals with said first damper portion at opposite ends of said first working surface, and then assembling said first damper portion with said second damper portion and placing said first and second working surfaces in said working chamber gap relation with said viscous damping medium filling the working chamber gap.

0062514

FIG. 1

FIG. 2

FIG. 3

FIG. 4

FIG. 5